# EUROPÄISCHE PATENTANMELDUNG

(11) **EP 1 918 060 A2**
(43) Veröffentlichungstag der Anmeldung: **07.05.2008**
(21) Anmeldenummer: 07120025.7
(22) Anmeldetag: 05.11.2007
(51) Int. Cl.: B23K 26/03, B23K 26/04, B23K 26/38

(54) **Verfahren zum Erfassen eines Materialabtrags**

(30) Priorität: 06.11.2006 DE 102006053269
(71) Anmelder: Forschungsgesellschaft für Strahlwerkzeuge-FGSW MbH, 70569 Stuttgart (DE)
(72) Erfinder: Walter, Dimitrij, 70199, Stuttgart (DE); Michalowski, Andreas, 70794, Filderstadt (DE)
(74) Vertreter: Hoeger, Stellrecht & Partner Patentanwälte

(57) **Zusammenfassung**

Um bei einem Verfahren zum Erfassen des Stattfindens eines Materialabtrags beim Bearbeiten eines Werkstücks aus mit Laserpulsen bestehender Laserstrahlung, insbesondere beim Bohren oder Schneiden des Werkstücks, die Tiefe der bereits erzeugten Bearbeitungseintiefung zu erfassen und insbesondere auch gegebenenfalls zu Erfassen, ob das Werkstück bereits durchgeschnitten wurde oder nicht, wird vorgeschlagen, dass einer der Laserpulse ausgewählt wird, dass eine durch den Materialabtrag des ausgewählten Laserpulses entstehende Stoßwelle erfasst wird und dass mindestens eine einer Ausbreitung der Stoßwelle entsprechende Messgröße erzeugt wird.

## Beschreibung

Die Erfindung betrifft ein Verfahren zum Erfassen des Stattfindens eines Materialabtrags beim Bearbeiten eines Werkstücks mit aus Laserpulsen bestehender Laserstrahlung, insbesondere beim Bohren oder Schneiden des Werkstücks.

Bei derartigen Bearbeitungen eines Werkstücks besteht stets das Problem, die Bearbeitung mit der aus Laserpulsen bestehenden Laserstrahlung exakt zu überwachen, und insbesondere zu erkennen, in welchem Ausmaß eine Bearbeitung des Werkstücks erfolgt ist oder nicht.

Insbesondere besteht das Problem, beim Bohren oder Schneiden eines Werkstücks, die Tiefe der bereits erzeugten Bearbeitungseintiefung zu erfassen und insbesondere auch gegebenenfalls zu Erfassen, ob das Werkstück bereits durchgeschnitten wurde oder nicht.

Dieses Problem wird durch ein Verfahren zum Erfassen des Stattfindens eines Materialabtrags beim Bearbeiten eines Werkstücks mit aus Laserpulsen bestehender Laserstrahlung, insbesondere beim Bohren oder Schneiden des Werkstücks erfindungsgemäß dadurch gelöst, dass einer der Laserpulse ausgewählt wird, dass eine durch den Materialabtrag des ausgewählten Laserpulses entstehende Schockwelle oder Stoßwelle erfasst wird und dass mindestens eine einer Ausbreitung der Schockwelle entsprechende Messgröße erzeugt wird.

Der Vorteil des erfindungsgemäßen Verfahrens ist darin zu sehen, dass durch das Erfassen der Ausbreitung der Schockwelle oder Stoßwelle eine Möglichkeit geschaffen wurde, das Stattfinden des Materialabtrags in einfacher Weise und zuverlässig zu erfassen.

Prinzipiell ist es bei dem erfindungsgemäßen Verfahren nicht zwingend, zu erfassen, wann der ausgewählte Laserpuls erzeugt wird.

Um jedoch bei den Phänomenen, die durch die Vielzahl von Laserpulsen entstehen, die Stoßwelle eindeutig dem ausgewählten Laserpuls zuordnen zu können, ist es günstig, wenn ein dem ausgewählten Laserpuls entsprechendes Startsignal erzeugt wird, welches dann die Möglichkeit eröffnet, die durch diesen erzeugte Stoßwelle eindeutig diesem Laserpuls zuzuordnen.

Hinsichtlich des Erfassens der Ausbreitung der Stoßwelle wurden im Zusammenhang mit der bisherigen Erläuterung der erfindungsgemäßen Lösung keine näheren Angaben gemacht.

So sieht ein vorteilhaftes Ausführungsbeispiel vor, dass das Startsignal zur Bestimmung der der Ausbreitung der Stoßwelle entsprechenden Messgröße herangezogen wird. Das heißt insbesondere, dass bei diesem Ausführungsbeispiel des erfindungsgemäßen Verfahrens die Ausbreitung der Stoßwelle ab dem durch das Startsignal vorgegebenen Zeitpunkt erfasst wird.

Insbesondere ist es dabei günstig, wenn als eine erste Messgröße die Ausbreitung der Stoßwelle seit dem Startsignal mindestens bis zu einem an einer Werkstückoberfläche liegenden Ort erfasst wird. Mit dieser Art des erfindungsgemäßen Verfahrens lässt sich in besonders einfacher Weise eine Messgröße erzeugen, welche mit der Tiefe der Bearbeitungseintiefung korreliert werden kann.

Die Ausbreitung der Stoßwelle kann dabei in unterschiedlichster Art und Weise detektiert werden.

Im Rahmen der erfindungsgemäßen Lösung sind die unterschiedlichsten Messverfahren denkbar.

Eine vorteilhafte Lösung sieht vor, dass die Ausbreitung der Stoßwelle durch ein ortsauflösendes Messverfahren erfasst wird.

Bei einem derartigen ortsauflösenden Messverfahren sind alle Möglichkeiten einsetzbar, die es erlauben, den Ort der Stoßwelle zu bestimmen.

Eine vorteilhafte Lösung sieht vor, dass das ortsauflösende Messverfahren die Ausbreitung der Stoßwelle durch Beugungserscheinungen eines optischen Messstrahlungsfeldes erfasst.

Bei einem derartigen Messverfahren lässt sich insbesondere ein optisches Schlierenverfahren vorteilhaft einsetzen.

Die beschriebenen ortsauflösenden Messverfahren lassen sich besonders günstig dann einsetzen, wenn die Ausbreitung der Stoßwelle nach einer definierten Zeitspanne nach dem Startsignal erfasst wird, das heißt, dass der Ort der Stoßwelle nach einer definierten Zeitspanne nach dem Startsignal ortsauflösend erfasst wird.

Alternativ oder ergänzend zu einem ortsauflösenden Messverfahren sieht eine weitere vorteilhafte Ausführungsform des erfindungsgemäßen Verfahrens vor, dass die Ausbreitung der Stoßwelle durch ein zeitauflösendes Messverfahren erfasst wird.

Auch bei einem derartigen zeitauflösenden Messverfahren ist vorzugsweise vorgesehen, dass die Ausbreitung der Stoßwelle durch Beugungserscheinungen eines optischen Messstrahlungsfeldes erfasst wird.

Alternativ oder ergänzend zum Erfassen der Stoßwelle durch Beugungserscheinungen eines optischen Messstrahlungsfeldes ist es ebenfalls denkbar, die Ausbreitung der Stoßwelle durch Druckschwankungen zu erfassen.

Beispielsweise ist bei derartigen zeitauflösenden Messverfahren vorgesehen, dass das zeitauflösende Messverfahren an einem definierten Ort zeitaufgelöst das Auftreten der Stoßwelle seit dem Startsignal ermittelt. Damit ist in einfacher Weise eine Messgröße ermittelbar, welche mit einer Tiefe der Bearbeitungseintiefung korreliert ist.

Alternativ oder ergänzend hierzu ist vorzugsweise vorgesehen, dass das zeitauflösende Messverfahren die Ausbreitung der Stoßwelle durch Erfassen der Stoßwelle an mindestens zwei unterschiedlichen, vorgegebenen Orten ermittelt.

Ein derartiges Messverfahren kommt zumindest prinzipiell ohne Berücksichtigung des Startsignals aus und kann zumindest in einfacher Weise dazu eingesetzt werden, eine Messgröße zu ermitteln, welche mit einer Ausbreitungsgeschwindigkeit der Stoßwelle korreliert ist.

Über eine derartige Korrelation mit der Ausbreitungsgeschwindigkeit der Stoßwelle lässt sich auch eine Korrelation zur Energie der Stoßwelle und somit im weitesten Sinne eine Korrelation mit der Energie des Laserpulses oder zumindest der in der Ablation umgesetzten Energie herstellen.

Dieses Verfahren lässt sich aber auch durch geeignete Berücksichtigung weiterer Parameter so einsetzen, dass es möglich ist, mit der Messgröße auch eine Tiefe der Bearbeitungseintiefung zu korrelieren.

Hinsichtlich der bisherigen Beschreibung der Stoßwelle wurde nicht näher differenziert, in welchem Medium sich die Stoßwelle ausbreitet.

Eine vorteilhafte Lösung sieht dabei vor, dass die im Rahmen des erfindungsgemäßen Verfahrens erfasste Stoßwelle eine solche ist, welche sich in einer an das Werkstück angrenzenden Atmosphäre ausbreitet.

Das heißt, dass sich die Stoßwelle im Wesentlichen in der an das Werkstück angrenzenden Gasatmosphäre ausbreitet, die je nach Art der Bearbeitung eine unterschiedliche Gaszusammensetzung aufweist.

Insbesondere wird dabei die Stoßwelle erfasst, die sich in einer an eine Bearbeitungsseite des Werkstücks angrenzenden Atmosphäre ausbreitet, wobei die an die Bearbeitungsseite angrenzende Atmosphäre sowohl die Atmosphäre umfasst, die an eine bearbeitungsseitige Oberfläche des Werkstücks angrenzt, als auch die Atmosphäre, welche in der Bearbeitungseintiefung vorliegt.

Insbesondere ist dabei die sich in der an das Werkstück angrenzenden Atmosphäre ausbreitende Stoßwelle die Stoßwelle, die sich ausgehend von dem Fokusbereich aus der Bearbeitungseintiefung heraus ausbreitet.

Dabei könnte rein theoretisch die sich aus der Bearbeitungseintiefung heraus ausbreitende Stoßwelle entweder noch in der Bearbeitungseintiefung oder unmittelbar nach Verlassen der Bearbeitungseintiefung erfasst werden.

Besonders günstig ist es jedoch, wenn die erfasste Stoßwelle sich über einer an die Bearbeitungseintiefung angrenzenden Oberfläche des Werkstücks ausbreitet, da die sich derart ausbreitende Stoßwelle besonders einfach erfasst werden kann.

Beim Erfassen der Ausbreitung der Stoßwelle in der an das Werkstück angrenzenden Atmosphäre lässt sich die Ausbreitung der Stoßwelle ausgehend von dem Startsignal erfassen und somit als erste Messgröße eine Messgröße bestimmen, welche mit einer Tiefe der Bearbeitungseintiefung korreliert ist.

Alternativ oder ergänzend hierzu lässt sich als zweite Messgröße die Ausbreitungsgeschwindigkeit der Stoßwelle in der Atmosphäre über der an die Bearbeitungseintiefung angrenzenden Werkstückoberfläche bestimmen und somit eine Messgröße, welche mit einer Energie der Stoßwelle und somit auch mit einer Energie des Laserpulses zumindest der bei der Ablation umgesetzten Energie des Laserpulses korreliert ist.

Alternativ oder ergänzend zu den vorstehend beschriebenen Ausführungsformen des erfindungsgemäßen Verfahrens, bei welchen die sich in der an das Werkstück angrenzenden Atmosphäre ausbreitende Stoßwelle erfasst wird, sieht eine weitere vorteilhafte Ausführungsform des erfindungsgemäßen Verfahrens vor, dass die Stoßwelle eine sich in dem Werkstück ausbreitende Stoßwelle ist.

Eine derart sich in dem Werkstück ausbreitende Stoßwelle lässt sich vorzugsweise ebenfalls an einer Werkstückoberfläche erfassen.

Die Werkstückoberfläche kann dabei beispielsweise durch ein Strahlungsfeld abgetastet werden und es werden die Modulationserscheinungen des Strahlungsfeldes erfasst.

Eine andere konstruktiv einfache Lösung sieht vor, dass die Stoßwelle durch einen die Werkstückoberfläche berührenden Sensor erfasst wird.

Insbesondere lässt sich in einfacher Weise das Signal eines derartigen Sensors mit einer Tiefe der Bearbeitungseintiefung korrelieren, wenn die Stoßwelle an einer bearbeitungsseitigen Werkstückoberfläche erfasst wird.

Es ist aber auch denkbar, den Sensor so anzuordnen, dass die Stoßwelle an einer bearbeitungsabgewandten Werkstückoberfläche erfasst wird.

Weitere Merkmale und Vorteile der erfindungsgemäßen Lösung sind Gegenstand der nachfolgenden Beschreibung sowie der zeichnerischen Darstellung einiger Ausführungsformen des erfindungsgemäßen Verfahrens.

In der Zeichnung zeigen:
- Fig. 1: eine schematische Darstellung eines Materialabtrags beim Bearbeiten eines Werkstücks mit aus Laserpulsen bestehender Laserstrahlung in einem ersten Stadium;
- Fig. 2: eine Darstellung ähnlich Fig. 1 in einem zweiten Stadium;
- Fig. 3: eine Darstellung ähnlich Fig. 1 in einem dritten Stadium;
- Fig. 4: eine Darstellung ähnlich Fig. 1 in einem vierten Stadium;
- Fig. 5: eine schematische Darstellung eines ersten Ausführungsbeispiels des erfindungsgemäßen Verfahrens;
- Fig. 6: eine Darstellung der ortsauflösenden Messung gemäß dem ersten Ausführungsbeispiel und der erhaltenen Messgröße entsprechend dem ersten Stadium in Fig. 1;
- Fig. 7: eine Darstellung ähnlich Fig. 6 entsprechend dem zweiten Stadium in Fig. 2;
- Fig. 8: eine Darstellung ähnlich Fig. 6 entsprechend dem dritten Stadium in Fig. 3;
- Fig. 9: eine Darstellung ähnlich Fig. 6 entsprechend dem vierten Stadium in Fig. 4;
- Fig. 10: eine schematische Darstellung eines zweiten Ausführungsbeispiels eines erfindungsgemäßen Verfahrens;
- Fig. 11: eine Darstellung des Messverfahrens und der erhaltenen Messgröße bei dem zweiten Ausführungsbeispiel des erfindungsgemäßen Verfahrens in dem ersten Stadium gemäß Fig. 1;
- Fig. 12: eine Darstellung entsprechend Fig. 11 in dem zweiten Stadium gemäß Fig. 2;
- Fig. 13: eine Darstellung ähnlich Fig. 11 in dem dritten Stadium gemäß Fig. 3;
- Fig. 14: eine Darstellung ähnlich Fig. 11 in dem vierten Stadium gemäß Fig. 4;
- Fig. 15: eine schematische Darstellung eines dritten Ausführungsbeispiels eines erfindungsgemäßen Verfahrens;
- Fig. 16: eine Darstellung einer geringen Ausbreitung der Stoßwelle, wie sie bei dem dritten Ausführungsbeispiel des erfindungsgemäßen Verfahrens erfasst wird;

- Fig. 17: eine Darstellung einer größeren Ausbreitung der Stoßwelle, wie sie bei dem dritten Ausführungsbeispiel des erfindungsgemäßen Verfahrens erfasst wird;
- Fig. 18: eine Darstellung der bei dem dritten Ausführungsbeispiel des erfindungsgemäßen Verfahrens erhaltenen Signale und der daraus ermittelbaren Messgröße;
- Fig. 19: eine Darstellung eines vierten Ausführungsbeispiels eines erfindungsgemäßen Verfahrens;
- Fig. 20: eine Darstellung der beim vierten Ausführungsbeispiel des erfindungsgemäßen Verfahrens erhaltenen Signale und der daraus abgeleiteten Messgröße;
- Fig. 21: eine Darstellung des vierten Ausführungsbeispiels des erfindungsgemäßen Verfahrens entsprechend Fig. 19 bei einer gegenüber Fig. 19 größeren Bearbeitungseintiefung;
- Fig. 22: eine Darstellung der bei dem vierten Ausführungsbeispiel des erfindungsgemäßen Verfahrens gemäß Fig. 21 erhaltenen Signale und der daraus ermittelten Messgröße entsprechend Fig. 20;
- Fig. 23: eine Darstellung eines fünften Ausführungsbeispiels eines erfindungsgemäßen Verfahrens;
- Fig. 24: eine Darstellung der bei dem fünften Ausführungsbeispiel des erfindungsgemäßen Verfahrens erhaltenen Signale und der daraus abgeleiteten Messgröße;
- Fig. 25: eine Darstellung ähnlich Fig. 23 des fünften Ausführungsbeispiels des erfindungsgemäßen Verfahrens, allerdings mit gegenüber der Darstellung in Fig. 23 unterschiedlicher Tiefe der Bearbeitungseintiefung und
- Fig. 26: eine Darstellung ähnlich Fig. 24 der bei dem fünften Ausführungsbeispiel gemäß Fig. 25 erhaltenen Signale und der daraus abgeleiteten Messgröße.

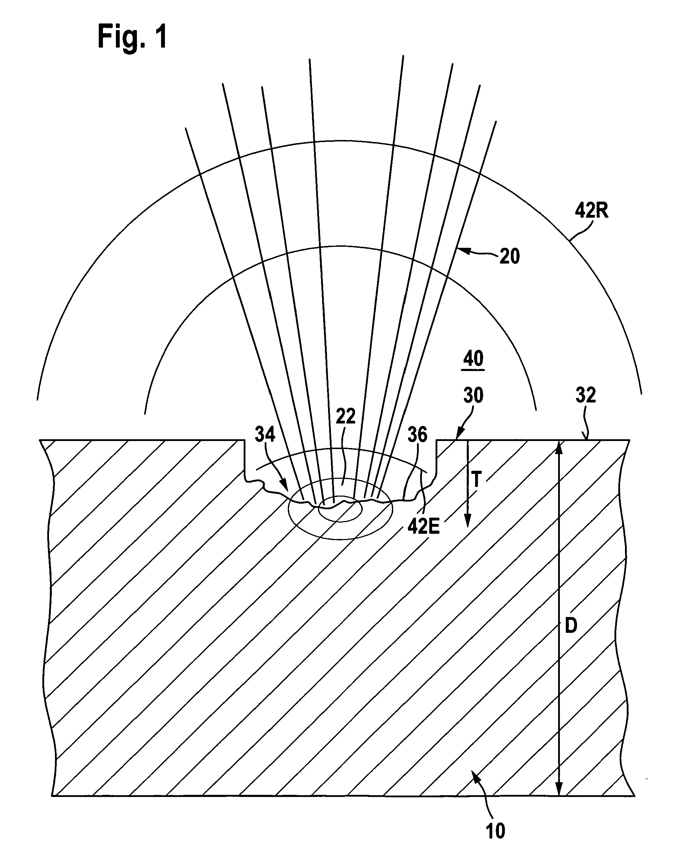

Bei einem Bearbeiten eines Werkstücks 10 mit Laserstrahlung 20 wird die aus einzelnen Laserpulsen 20 bestehende Laserstrahlung in einem Fokusbereich 22 auf einer Bearbeitungsseite 30 des Werkstücks 10 fokussiert und dadurch erfolgt in dem Fokusbereich 22 eine Ablation von Material des Werkstücks 10 und somit ein Materialabtrag, der dazu führt, dass sich ausgehend von einer bearbeitungsseitigen Oberfläche 32 des Werkstücks 10 eine Bearbeitungseintiefung 34 in dem Werkstück 10 ausbildet, die, wie in Fig. 1 bis 4 dargestellt, bei einer Vielzahl von aufeinanderfolgenden Laserpulsen 20 sich ausgehend von der bearbeitungsseitigen Oberfläche 32 mit zunehmender Tiefe T in das Werkstück 10 hineinerstreckt, wobei der Fokusbereich 22 sich entweder beiderseits einer festgelegten Fokuslage erstreckt oder schrittweise oder kontinuierlich der Wanderungsbewegung des in Bodenbereiche 36 der Bearbeitungseintiefung 34 folgen kann.

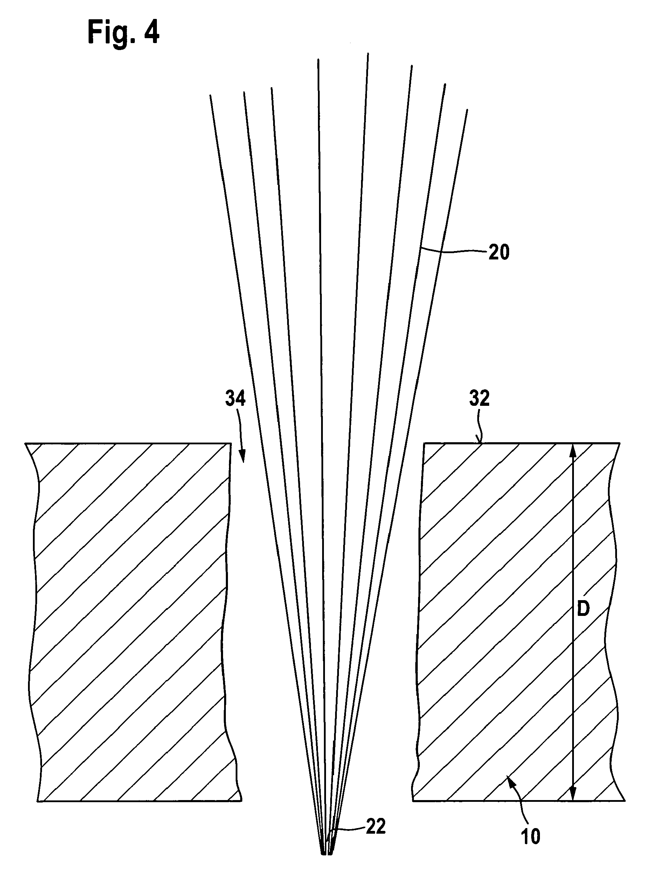

Die Bearbeitungseintiefung 34 kann sich schließlich durch die gesamte Dicke D des Werkstücks hindurch erstrecken, so dass durch die Erzeugung einer derartigen Bearbeitungseintiefung 34 ein Bohren des Werkstücks 10 oder ein Trennen des Werkstücks 10 mit der Laserstrahlung durchführbar ist, wobei, wie in Fig. 4 dargestellt, bei sich vollständig über die Dicke D des Werkstücks 10 erstreckender Bearbeitungseintiefung 34 in dem Fokusbereich 22 keine Ablation mehr entsteht, da im Fokusbereich 22 kein Bodenbereich 36 der Bearbeitungseintiefung 34 mehr vorhanden ist, in dem eine Ablation erfolgen kann.

Die in dem Bodenbereich 36 der Bearbeitungseintiefung 34 entstehenden Ablation von Material des Werkstücks 10 kann auch mit einer sehr rasch erfolgenden Verdampfung des Materials des Werkstücks 10 in dem Bodenbereich 36 beschrieben werden und führt in einer an die Bearbeitungsseite 30 angrenzenden gasförmigen Atmosphäre 40, die sich sowohl bis zur bearbeitungsseitigen Oberfläche 32 als auch bis zum Bodenbereich 36 der Bearbeitungseintiefung 34 erstreckt, zu einer Stoßwelle 42, welche sich zunächst als eindimensionale Stoßwelle 42E in der Bearbeitungseintiefung 34 in einer im Wesentlichen eindimensionalen Ausbreitungsrichtung 44 ausbreitet, welche parallel zu einer Längsrichtung 38 der Bearbeitungseintiefung 34 verläuft, und welche sich dann bei Erreichen der bearbeitungsseitigen Oberfläche 32 als räumliche Stoßwelle 42R in der Atmosphäre 40 ausbreitet.

Die Ablation im Fokusbereich 22 führt jedoch nicht nur zur Ausbreitung der Stoßwelle 42 in der Atmosphäre 40, sondern auch zur Ausbreitung einer Stoßwelle 52 im Material des Werkstücks 10, wobei die Stoßwelle 52 im Material des Werkstücks 10 sich ausgehend von dem Bodenbereich 36 der Bearbeitungseintiefung 34 in dem gesamten Werkstück 10 als räumliche Welle 52R zu allen Seiten des Bodenbereichs 36 hin ausbreitet.

Das erfindungsgemäße Verfahren sieht nun vor, durch Erfassen einer oder beider Stoßwellen 42 und 52 zu erkennen, ob ein Materialabtrag, insbesondere in Form einer Ablation, im Fokusbereich 22 eines Laserpulses 20 stattgefunden hat und vorzugsweise außerdem zu Erfassen, in welcher Tiefe T ausgehend von der bearbeitungsseitigen Oberfläche 32 der Materialabtrag stattgefunden hat, sowie vorzugsweise ebenfalls zu erfassen, mit welcher eingebrachten Energie ein derartiger Materialabtrag im Fokusbereich 22 stattgefunden hat.

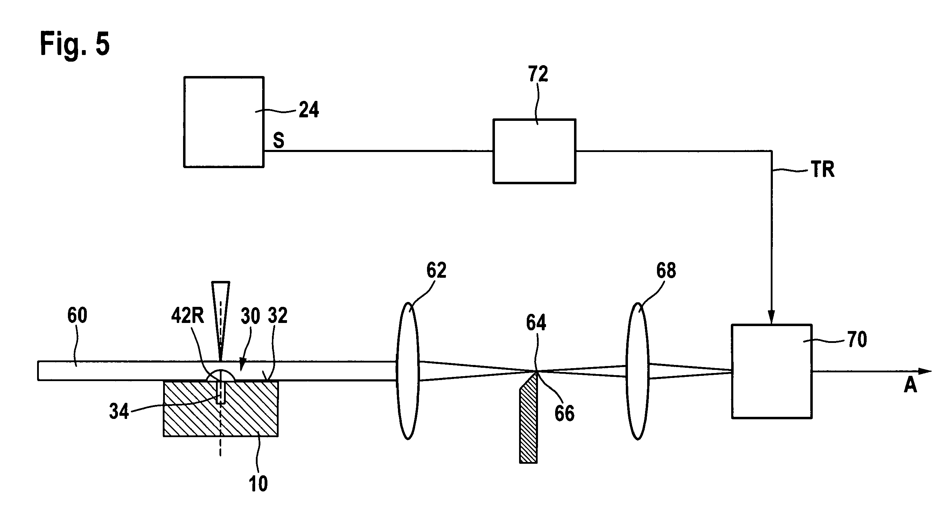

Ein erstes Ausführungsbeispiel eines erfindungsgemäßen Verfahrens, dargestellt in Fig. 5, sieht vor, die sich über der bearbeitungsseitigen Oberfläche 32 räumlich ausbreitende Stoßwelle 42R durch ein sogenanntes bekanntes Schlierenverfahren zu erfassen. Bei diesem Schlierenverfahren durchsetzt ein kollimierter Beleuchtungsstrahl 60 einen unmittelbar über der Bearbeitungseintiefung 34 und der bearbeitungsseitigen Oberfläche 32 liegenden Raumbereich und wird nach Durchstrahlen dieses Raumbereichs durch eine Abbildungsoptik 62 auf einen Fokus 64 fokussiert, welcher ohne dass sich die Stoßwelle 42R in dem von dem kollimierten Beleuchtungsstrahl 60 durchsetzten Raumbereich ausbreitet, von einer Schlierenschneide 66 blockiert wird, die verhindert, dass der Fokus 64 durch eine weitere Abbildungsoptik 68 auf eine Bilderfassungseinheit 70 abgebildet wird.

Die Bilderfassungseinheit 70 ist somit in der Lage, eine Messgröße A auszugeben, die der Ausdehnung der erfassten Stoßwelle 42R über der bearbeitungsseitigen Oberfläche 32 entspricht und somit ein Maß für die Tiefe T der Bearbeitungseintiefung 34 darstellt.

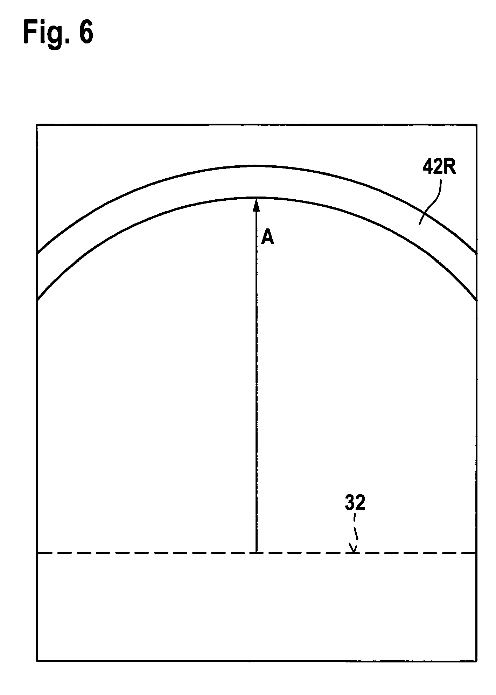

Nur das Auftreten einer Stoßwelle 42R in dem von dem kollimierten Beleuchtungsstrahl 60 durchsetzten Raumbereich führt zu Beugungserscheinungen in dem kollimierten Beleuchtungsstrahl 60 und somit zur Erzeugung eines der räumlichen Ausdehnung der Stoßwelle 42R entsprechenden hellen Bogens in einem Bild in der Bilderfassungseinheit 70, wie in Fig. 6 bis Fig. 8 dargestellt.

Die Bilderfassungseinheit 70 erfasst dabei die Ausdehnung der Stoßwelle 42R über der bearbeitungsseitigen Oberfläche 32 zu einem definierten Zeitpunkt, welcher dadurch vorgegeben wird, dass von einem Laser 24 beim Erzeugen eines Laserpulses 20 ein dem Entstehungszeitpunkt dieses Laserpulses 20 entsprechendes Startsignal S generiert wird, welches einer Zeitverzögerungseinheit 72 zugeleitet wird und in dieser ein zeitverzögertes Triggersignal TR generiert, welches die Bilderfassungseinheit 70 triggert und somit festlegt, zu welchem Zeitpunkt nach dem Entstehen des Laserpulses 20 und somit der Generierung des Startsignals S eine Bilderfassung erfolgen soll.

Die Ausdehnung der Stoßwelle 42R über der bearbeitungsseitigen Oberfläche 32 hängt nun bei Erfassung des Bildes mittels der Bilderfassungseinheit 70 jeweils zum selben Zeitpunkt nach Generierung des Startsignals S von der Laufzeit der sich in der Atmosphäre 40 ausbreitenden Stoßwelle 42 ab, und zwar einmal von der Laufzeit, die ab dem Zeitpunkt der Ablation von der eindimensionalen Stoßwelle 42E benötigt wird, um von dem Fokusbereich 22 in Richtung 44 durch die Bearbeitungseintiefung 34 bis zur bearbeitungsseitigen Oberfläche 32 zu wandern und dann noch von der Zeit, die der Stoßwelle 42R zur Verfügung steht, sich in dem Raum über der bearbeitungsseitigen Oberfläche 32 auszubreiten, bis eine Erfassung des Bildes der Beugungserscheinung durch die Bilderfassungseinheit 70 erfolgt.

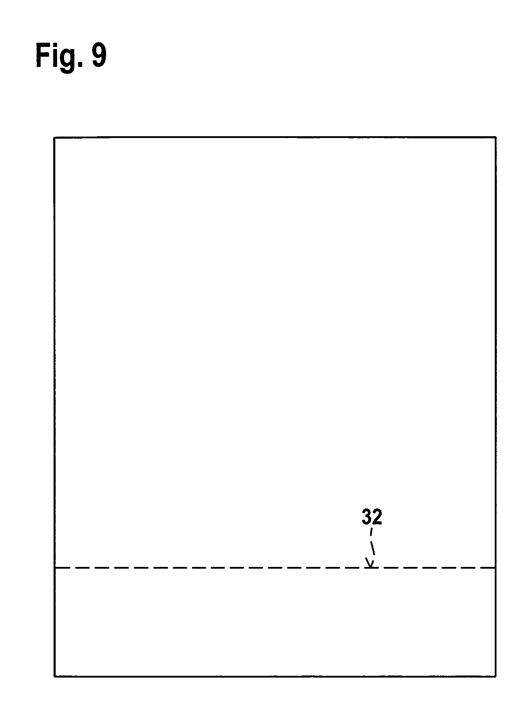

Die Ausdehnung der den Einzelnen, in Fig. 1 bis 4 dargestellten, Stadien entsprechenden Stoßwelle 42 ist in Fig. 6 bis 9 als schematisches von der Bilderfassungseinheit 70 erfasstes Bild dargestellt.

Fig. 6 zeigt, dass die Stoßwelle 42R eine große Ausdehnung A über der bearbeitungsseitigen Oberfläche 32 aufweist, die daher rührt, dass die Bearbeitungseintiefung 34 in dem Fig. 1 entsprechenden Stadium eine geringe Tiefe T aufweist, so dass die Stoßwelle 42E sehr rasch die Bearbeitungseintiefung 34 verlässt und sich die Stoßwelle 42R ausbreiten kann, welche dann, bis zur Erfassung der Beugungserscheinung derselben durch die Bilderfassungseinheit 70 ausreichend Zeit hat, sich auszubreiten, so dass deren Ausdehnung, wie in Fig. 6 dargestellt, über der bearbeitungsseitigen Oberfläche 32 groß ist.

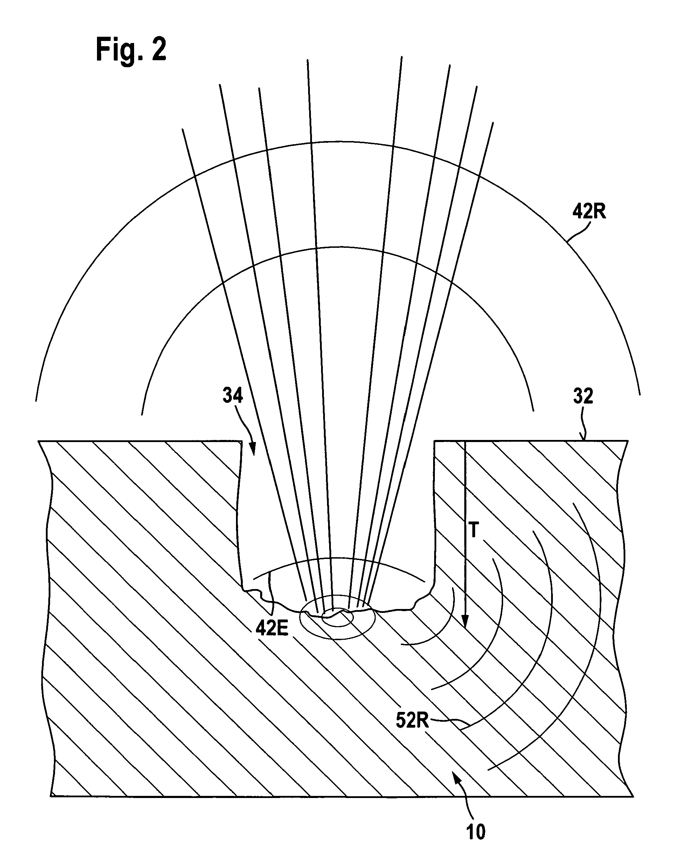

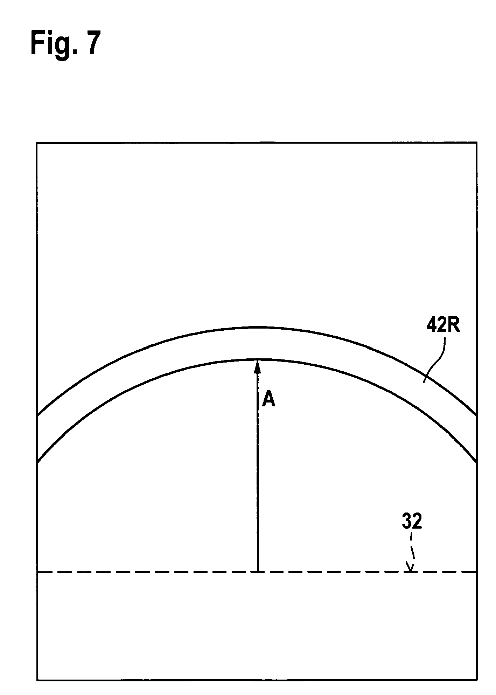

Im Gegensatz dazu benötigt bei dem in Fig. 2 dargestellten Stadium die Stoßwelle 42E mehr Zeit, um die Bearbeitungseintiefung 34 zu verlassen und sich dann als Stoßwelle 42R weiter auszubreiten, so dass die Zeit, die der Stoßwelle 42R bis zur Erfassung der entsprechenden Beugungserscheinung durch die Bilderfassungseinheit 70 bleibt, kürzer ist. Aus diesem Grund hat auch, wie in Fig. 7 dargestellt, die Stoßwelle 42R eine geringere Ausdehnung A als bei dem Fig. 1 entsprechenden Stadium.

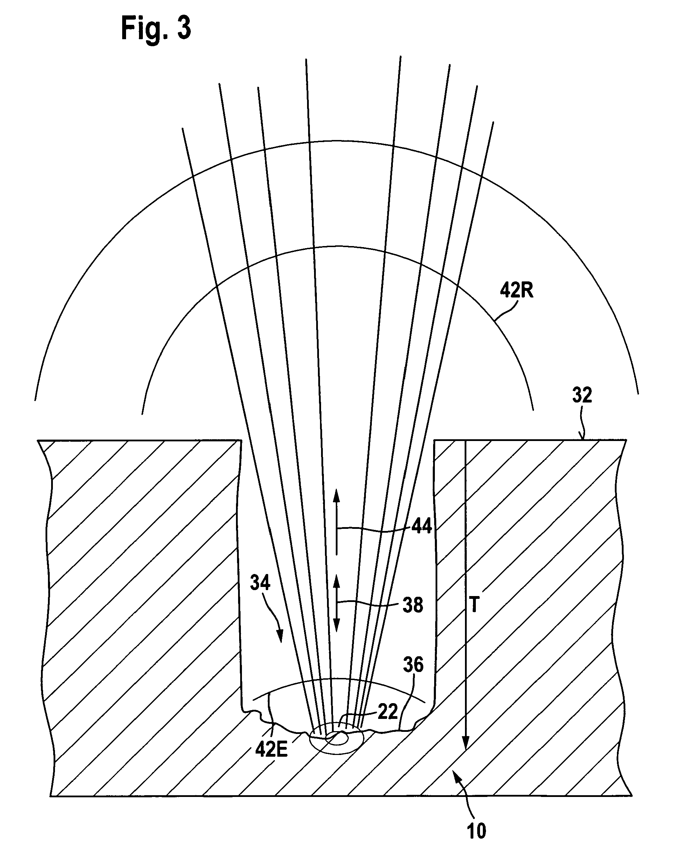

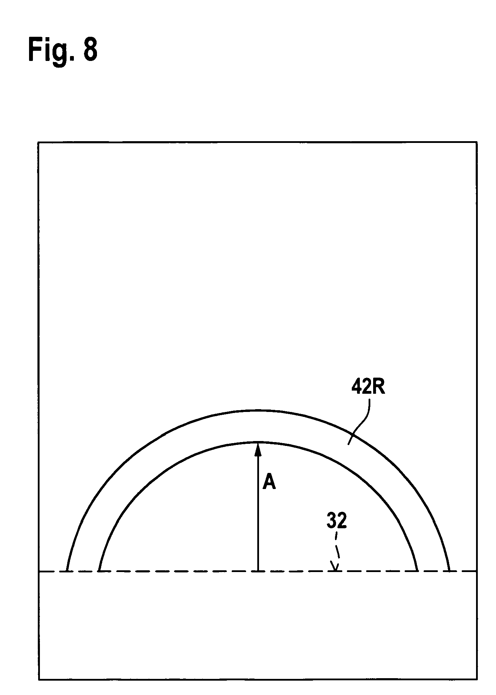

Bei dem Fig. 3 entsprechenden Stadium ist die Bearbeitungseintiefung 34 noch tiefer in das Werkstück 10 eingedrungen, so dass die Stoßwelle 42E noch mehr Zeit benötigt, um sich in der Richtung 44 bis zur bearbeitungsseitigen Oberfläche 32 auszudehnen und sich dann als Stoßwelle 42R weiter auszubreiten. Aus diesem Grund ist die durch die Beugungserscheinung tatsächlich in Fig. 8 erfasste Ausdehnung A der Stoßwelle 42R über der bearbeitungsseitigen Oberfläche 32 bei dem der Fig. 3 entsprechenden Stadium noch geringer.

Schließlich ist dann, wenn sich gemäß dem in Fig. 4 dargestellten Stadium die Bearbeitungseintiefung 34 durch das gesamte Werkstück 10 hindurcherstreckt, keine Ablation im Fokusbereich 22 mehr möglich und somit entsteht auch gar keine Stoßwelle 22, so dass in diesem Fall die Bilderfassungseinheit 70 kein Bild einer Beugungserscheinung Stoßwelle 42 mehr erfassen kann.

Wie sich aus den Fig. 6 bis 9 ergibt, ermöglicht somit die ortsaufgelöste Erfassung der Ausdehnung A der Stoßwelle 42R über ein Erfassen der Beugungserscheinung nach einem bestimmten Zeitraum ab Erzeugung des Startsignals S durch einen ausgewählten Laserpuls 20 die Möglichkeit, die Tiefe T der Bearbeitungseintiefung 34 quantitativ zu erfassen und außerdem noch die Möglichkeit, zu erfassen, ob überhaupt in der Bearbeitungseintiefung 34 noch eine Ablation stattfindet oder ob sich die Bearbeitungseintiefung 34, wie in Fig. 4 dargestellt, durch das gesamte Werkstück 10 hindurcherstreckt und somit keinerlei Ablation im Fokusbereich 22 mehr erfolgt.

Die ortsaufgelöste Auswertung der Ausdehnung der Stoßwelle 42R über der bearbeitungsseitigen Oberfläche 32 kann je nach Aufbau der Bilderfassungseinheit 70 in unterschiedlichster Art und Weise erfolgen.

Beispielsweise wäre es denkbar, die Bilderfassungseinheit 70 als schnelle Kamera auszubilden, und somit die Auswertung der Ausdehnung A der Beugungserscheinung der Stoßwelle 42R anhand der von der Bilderfassungseinheit 70 erfassten Bilder vorzunehmen.

Es wäre aber auch denkbar, die Bilderfassungseinheit 70 als Kamerachip auszubilden und somit unmittelbar aufgrund der Lage der ausgeleuchteten Pixel eine Messgröße für die Ausdehnung A der Stoßwelle 42R zu erhalten.

Ein zweites Ausführungsbeispiel eines erfindungsgemäßen Verfahrens basiert auf dem in Fig. 1 dargestellten Verfahren, allerdings arbeitet dieses Verfahren mit einer zeitaufgelösten Erfassung der Stoßwelle 42R.

Aus diesem Grund ist anstelle der Bilderfassungseinheit 70 eine Blende 80 vorgesehen, deren Durchlassöffnung 82 so justiert ist, dass in dieser das durch Beugung erzeugte Bild der Stoßwelle 42R in einer definierten räumlichen Ausdehnung über der bearbeitungsseitigen Oberfläche 32 erscheint.

Die Durchlassöffnung 82 wird über eine Abbildungsoptik 84 auf einen Fotosensor 86 abgebildet, welcher zum Zeitpunkt des Auftretens der Stoßwelle 42R in der der Lage der Durchlassöffnung 82 der Blende 80 entsprechenden Ausdehnung über der bearbeitungsseitigen Oberfläche 32 ein Signal W abgibt.

Ferner wird im Laser 24 ebenfalls ein Laserpuls 20 ausgewählt und dieser Laserpuls 20 generiert das Startsignal S.

Sowohl das Startsignal S als auch das Signal W werden einer Zeitauswertungseinheit 90 zugeführt, die eine Zeitspanne V ermittelt, mit welcher das Signal W gegenüber dem Startsignal S verzögert auftritt.

Die Zeitspanne V stellt dabei ein Maß für die Zeit dar, die die Stoßwelle 42 benötigt, die durch die Einstellung der Blende 80 vorgebbare räumliche Ausdehnung in Form der Stoßwelle 42R zu erreichen, und diese Zeitspanne V wird von der Zeitauswertungseinheit 90 als Messgröße ausgegeben.

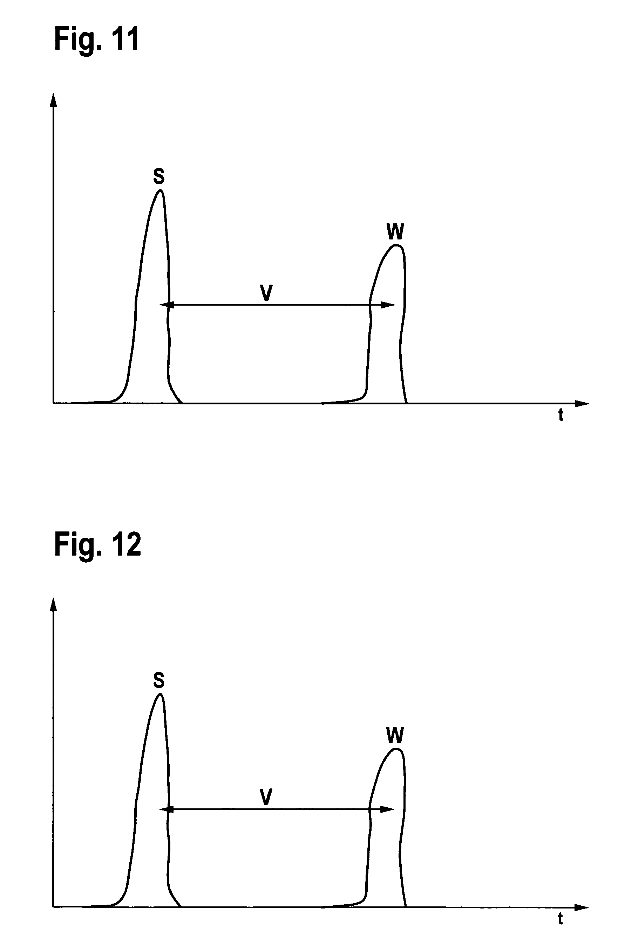

Die den in den Fig. 1 bis 4 dargestellten Stadien entsprechenden Verzögerungen V sind in den Fig. 11 bis 14 dargestellt.

In Fig. 11 ist erkennbar dass bei einer geringen Tiefe T der Bearbeitungseintiefung 34 die Verzögerung V lediglich eine kurze Zeitspanne darstellt, da die Stoßwelle 42 aufgrund der geringen Tiefe T der Bearbeitungseintiefung 34 sehr schnell die vorgegebene Ausdehnung erreicht.

Wird, entsprechend dem Stadium gemäß Fig. 2, die Bearbeitungseintiefung 34 tiefer, so wird die Zeitspanne V größer, wie in Fig. 12 dargestellt, da die Stoßwelle 42 eine größere Zeitspanne benötigt, um die vorgegebene Ausdehnung zu erreichen.

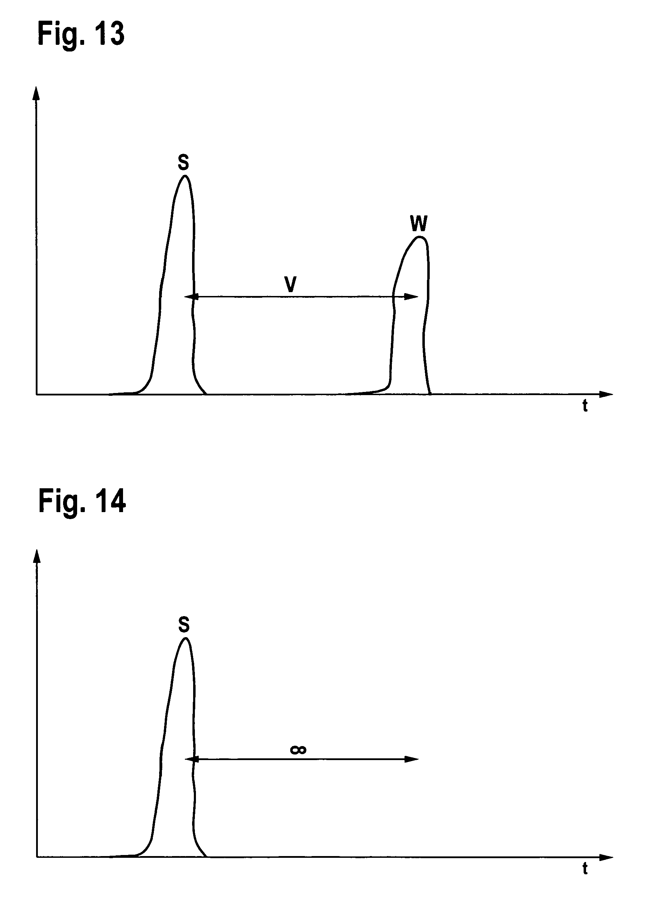

Bei noch größerer Tiefe T der Bearbeitungseintiefung 34, entsprechend dem Stadium gemäß Fig. 3, wird die Zeitspanne V, wie in Fig. 13 dargestellt, noch größer, da die Stoßwelle 42 einen noch größeren Weg in der Bearbeitungseintiefung 34 zurücklegen muss.

Schließlich wird bei dem der Fig. 4 entsprechenden Stadium gar keine Stoßwelle mehr erzeugt und somit auch keine Stoßwelle mehr detektiert.

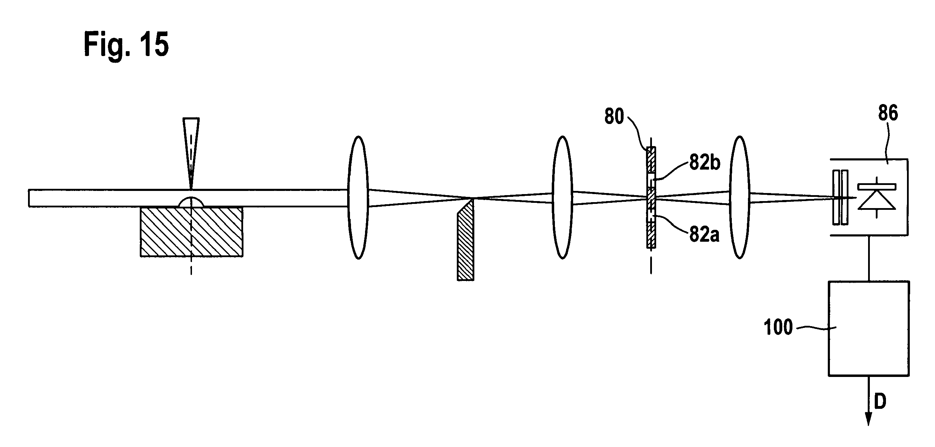

Ein weiteres Ausführungsbeispiel des erfindungsgemäßen Verfahrens ist in Fig. 15 dargestellt.

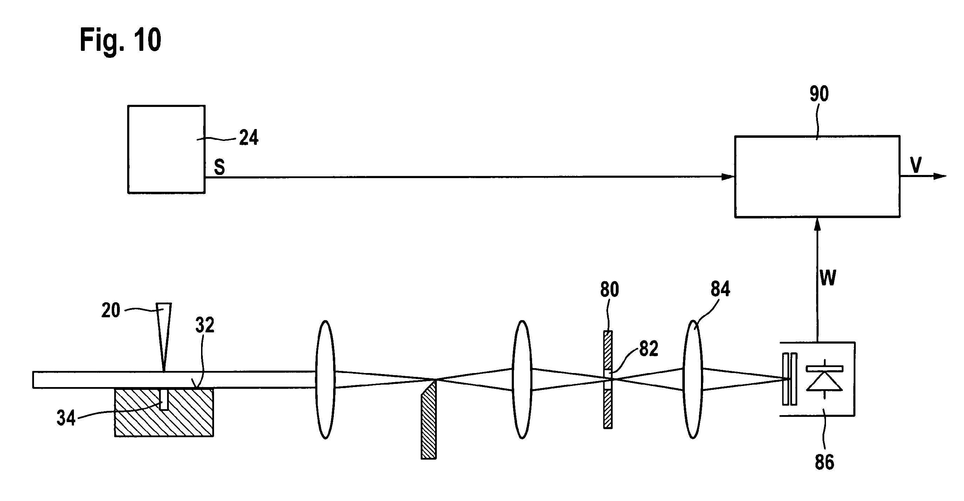

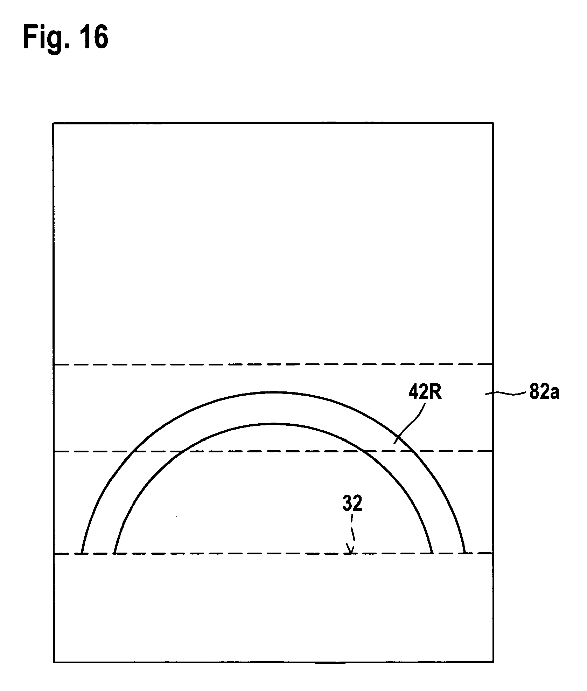

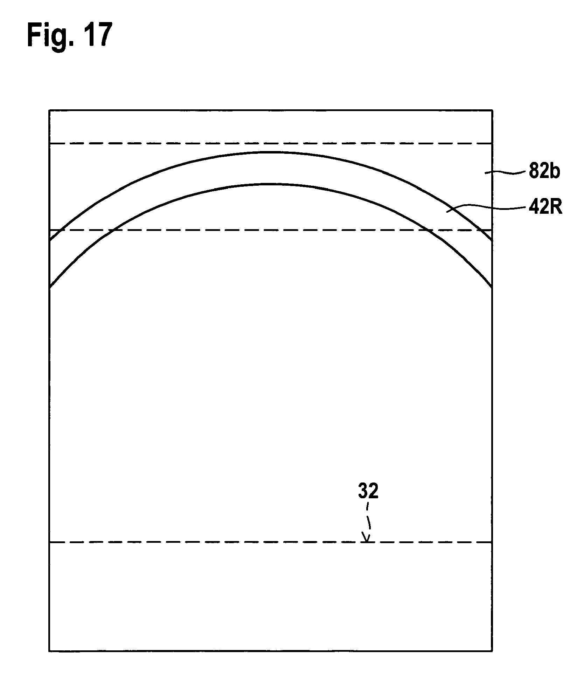

Bei diesem entspricht der Aufbau im Wesentlichen dem Ausführungsbeispiel gemäß Fig. 10, allerdings mit dem Unterschied, dass die Blende 80 zwei Durchlassöffnungen 82a und 82b aufweist, die, wie in Fig. 16 und 17 dargestellt, so angeordnet sind, dass sie zwei unterschiedliche Ausdehnungen der Stoßwelle 42R erfassen.

Die Durchlassöffnung 82a erfasst eine geringere Ausdehnung der Stoßwelle 42R, während die Durchlassöffnung 82b eine größere Ausdehnung der Stoßwelle 42R erfassen kann.

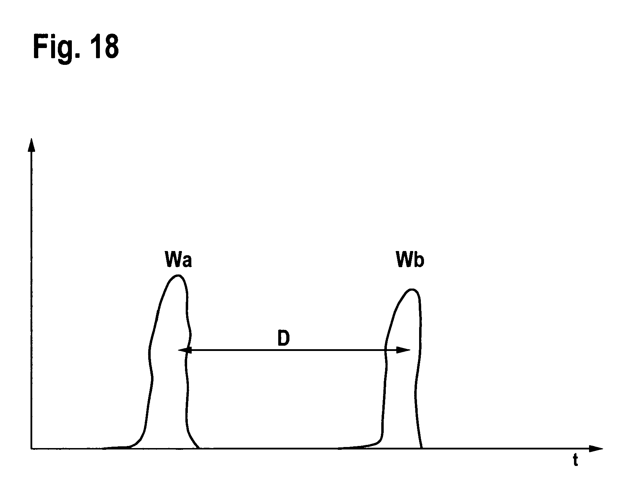

Wie in Fig. 18 dargestellt, werden dabei für jede Stoßwelle 42R von dem Fotodetektor 86 zwei Signale Wa und Wb erzeugt, und zwar zeitlich aufeinanderfolgend, wobei diese beiden Signale Wa und Wb den unterschiedlichen räumlichen Ausdehnungen der Stoßwelle 42R entsprechen.

Aus der Zeitdifferenz TD, die zwischen dem Auftreten der Signale Wa und Wb liegt, lässt sich auf der Basis der Sedov'schen Theorie die Ausbreitungsgeschwindigkeit der Stoßwelle 42R und somit über die Ausbreitungsgeschwindigkeit der Energieinhalt der Stoßwelle 42R bestimmen.

Bei diesem Ausführungsbeispiel ist es allerdings nicht notwendig, ein Startsignal S für die Messung der Signale Wa und Wb zu erzeugen und auszuwerten.

Die Ermittlung der Zeitdifferenz TD zwischen den Signalen Wa und Wb erfolgt dabei in einer Zeitauswertungseinheit 100, die die Differenz D als Messgröße ausgibt.

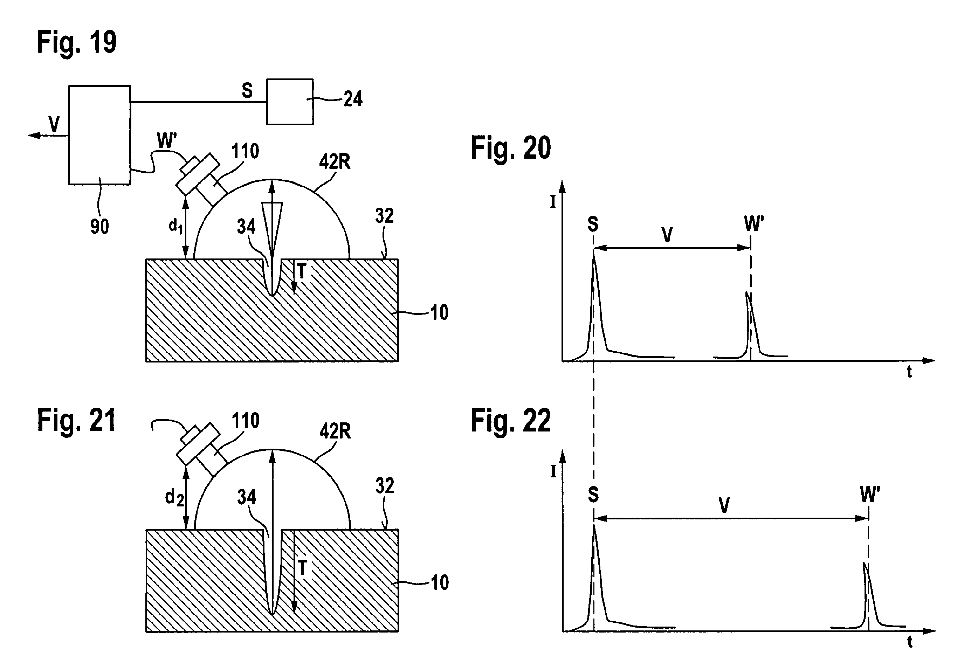

Bei einem vierten Ausführungsbeispiel eines erfindungsgemäßen Verfahrens, dargestellt in Fig. 19 und Fig. 20 erfolgt die Erfassung der Stoßwelle 42R nicht aufgrund des Schlierenverfahrens, sondern durch einen Drucksensor 110, welcher in einem vorgebbaren Abstand von der bearbeitungsseitigen Oberfläche 32 des Werkstücks 10 angeordnet ist, um die durch die Stoßwelle 42R erfolgende Druckschwankung zu erfassen.

Der Drucksensor 110 erzeugt bei Auftreten der durch die Stoßwelle 42R hervorgerufenen Druckschwankung ein Signal W', welches in der Zeitauswertungseinheit 90 in gleicher Weise ausgewertet wird, wie beim zweiten Ausführungsbeispiel beschrieben, so dass die Zeitspanne V zwischen dem Startsignal S, erzeugt bei Erzeugung des jeweiligen ausgewählten Laserpulses 20, und dem Auftreten des Signals W' als Messgröße ausgegeben wird.

Die Position des Drucksensors 110 entspricht dabei einer definierten Ausdehnung der Stoßwelle 42R.

Wie ein Vergleich der Fig. 19 und 21 sowie 20 und 22 zeigt, erfolgt die Messung mit dem Drucksensor 110 stets an lokal derselben Stelle über der bearbeitungsseitigen Oberfläche 32 des Werkstücks 10, allerdings ist die Zeit, zu der das Signal W' jeweils nach dem Startsignal S auftritt, unterschiedlich, und zwar abhängig von der Tiefe T der Bearbeitungseintiefung 34.

Das vierte Ausführungsbeispiel des erfindungsgemäßen Verfahrens stellt somit ebenfalls eine zeitaufgelöste Messung der Ausbreitung der Stoßwelle 42R dar.

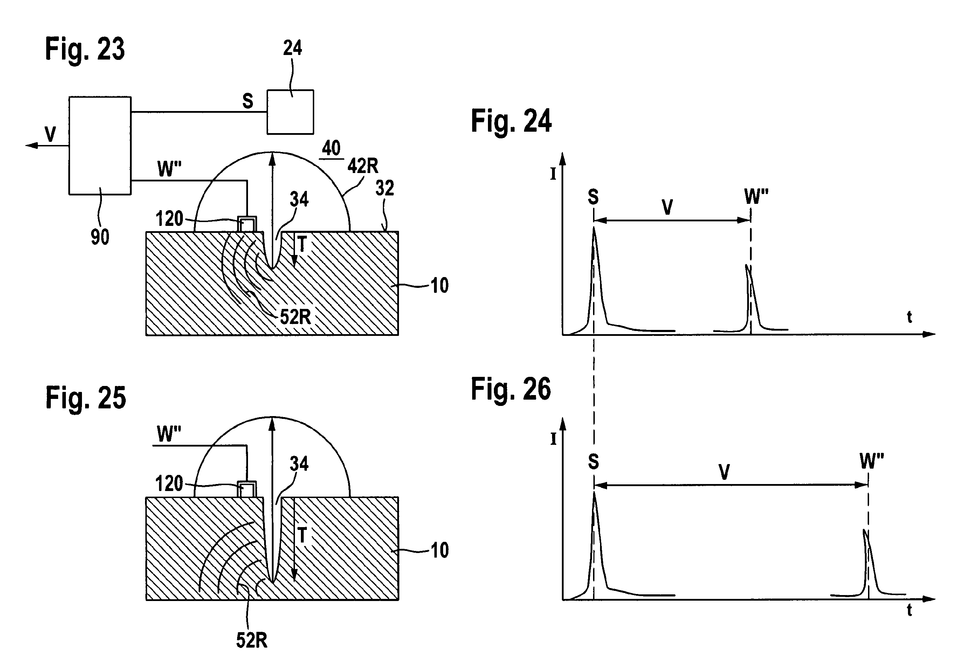

Bei einem fünften Ausführungsbeispiel eines erfindungsgemäßen Verfahrens, dargestellt in den Fig. 23 bis 26, erfolgt ebenfalls eine zeitaufgelöste Messung und zwar mit einem Sensor 120, der so ausgebildet ist, dass er in der Lage ist, die sich in dem Werkstück 10 ausbreitende Stoßwelle 52R zu detektieren. Der Sensor 120 sitzt dabei nahe der Bearbeitungseintiefung 34, vorzugsweise auf der bearbeitungsseitigen Oberfläche 32 des Werkstücks 10, und erzeugt bei Ankunft der Stoßwelle 52R ein Signal W", welches in gleicher Weise wie das Signal W' beim voranstehenden Ausführungsbeispiel durch die Zeitauswertungseinheit 90 hinsichtlich seiner Verzögerung V gegenüber dem Startsignal S ausgewertet und als Messgröße ausgegeben wird.

In gleicher Weise wie bei dem voranstehenden Ausführungsbeispiel lässt sich der Sensor 120 so anordnen, dass die Zeitspanne V, mit welcher das Signal W" nach Erzeugen des Startsignals S auftritt, ein Maß für die Tiefe T der Bearbeitungseintiefung 34 darstellt, da jeweils der Weg, den die Stoßwelle 52R im Werkstück 10 zurücklegt, unterschiedlich lang ist.

Aus diesem Grund ist es günstig, wenn der Sensor 120 nahe der Bearbeitungseintiefung 34 angeordnet ist, so dass der Wegunterschied für die Stoßwelle 52R im Werkstück 10 im Wesentlichen proportional zur Tiefe T der Bearbeitungseintiefung ist.

Von der Zeitauswertungseinheit 90 wird somit durch die Zeitspanne V eine der Tiefe T der Bearbeitungseintiefung 34 entsprechende Messgröße generiert.

Besonders günstig lassen sich die erfindungsgemäßen Verfahren dann einsetzen, wenn die Bearbeitungseintiefung 34 eine Bohrung ist, da sich dann die Korrelationen hinsichtlich der Tiefe T der Bohrung sehr einfach ergeben.

## Patentansprüche

1. Verfahren zum Erfassen des Stattfindens eines Materialabtrags beim Bearbeiten eines Werkstücks (10) aus mit Laserpulsen (120) bestehender Laserstrahlung (18), insbesondere beim Bohren oder Schneiden des Werkstücks,
**dadurch gekennzeichnet, dass** einer der Laserpulse (20) ausgewählt wird, dass eine durch den Materialabtrag des ausgewählten Laserpulses (20) entstehende Stoßwelle (42, 52) erfasst wird und dass mindestens eine einer Ausbreitung der Stoßwelle (42, 52) entsprechende Messgröße (A, V, D) erzeugt wird.

2. Verfahren nach Anspruch 1, **dadurch gekennzeichnet, dass** ein dem ausgewählten Laserpuls (20) entsprechendes Startsignal (S) erzeugt wird.

3. Verfahren nach Anspruch 2, **dadurch gekennzeichnet, dass** das Startsignal (S) zur Bestimmung der der Ausbreitung der Stoßwelle (42, 52) entsprechenden Messgröße (A, V) herangezogen wird.

4. Verfahren nach Anspruch 3, **dadurch gekennzeichnet, dass** als eine erste Messgröße (A, V) die Ausbreitung der Stoßwelle (42, 52) seit dem Startsignal (S) mindestens bis zu einem an einer Oberfläche (32) des Werkstücks (10) liegenden Ort erfasst wird.

5. Verfahren nach einem der Ansprüche, **dadurch gekennzeichnet, dass** die Ausbreitung der Stoßwelle (42, 52) durch ein ortsauflösendes Messverfahren erfasst wird.

6. Verfahren nach Anspruch 5, **dadurch gekennzeichnet, dass** das ortsauflösende Messverfahren die Ausbreitung der Stoßwelle (42) durch Beugungserscheinungen eines optischen Messstrahlungsfeldes (60) erfasst.

7. Verfahren nach Anspruch 5 oder 6, **dadurch gekennzeichnet, dass** die Ausbreitung der Stoßwelle (42, 52) nach einer definierten Zeitspanne nach dem Startsignal (S) erfasst wird.

8. Verfahren nach einem der voranstehenden Ansprüche, **dadurch gekennzeichnet, dass** die Ausbreitung der Stoßwelle (42, 52) durch ein zeitauflösendes Messverfahren erfasst wird.

9. Verfahren nach Anspruch 8, **dadurch gekennzeichnet, dass** die Ausbreitung der Stoßwelle (42, 52) durch Beugungserscheinungen eines optischen Messstrahlungsfeldes (60) erfasst wird.

10. Verfahren nach Anspruch 8, **dadurch gekennzeichnet, dass** die Ausbreitung der Stoßwelle (42, 52) durch Druckschwankungen erfasst wird.

11. Verfahren nach einem der Ansprüche 8 bis 10, **dadurch gekennzeichnet, dass** das zeitauflösende Messverfahren an einem definierten Ort zeitaufgelöst das Auftreten der Stoßwelle (42, 52) seit dem Startsignal (S) ermittelt.

12. Verfahren nach einem der Ansprüche 8 bis 11, **dadurch gekennzeichnet, dass** das zeitauflösende Messverfahren die Ausbreitung der Stoßwelle (42, 52) durch Erfassen der Stoßwelle (42, 52) an mindestens zwei unterschiedlichen vorgegebenen Orten ermittelt.

13. Verfahren nach einem der voranstehenden Ansprüche, **dadurch gekennzeichnet, dass** die Stoßwelle eine sich in einer an das Werkstück (10) angrenzenden Atmosphäre (40) ausbreitende Stoßwelle (42) ist.

14. Verfahren nach Anspruch 13, **dadurch gekennzeichnet, dass** die Stoßwelle (42) sich in der an eine Bearbeitungsseite des Werkstücks (10) angrenzenden Atmosphäre (40) ausbreitet.

15. Verfahren nach Anspruch 13 oder 14, **dadurch gekennzeichnet, dass** die Stoßwelle (42) sich aus einer Bearbeitungseintiefung (34) heraus ausbreitet.

16. Verfahren nach Anspruch 15, **dadurch gekennzeichnet, dass** die Stoßwelle (42) sich über einer an die Bearbeitungseintiefung (34) angrenzenden Oberfläche (32) des Werkstücks (10) ausbreitet.

17. Verfahren nach einem der voranstehenden Ansprüche, **dadurch gekennzeichnet, dass** als zweite Messgröße (D) die Ausbreitungsgeschwindigkeit der Stoßwelle (42) in der Atmosphäre (40) über der an die Bearbeitungseintiefung (34) angrenzenden Werkstückoberfläche (32) erfasst wird.

18. Verfahren nach einem der voranstehenden Ansprüche, **dadurch gekennzeichnet, dass** die Stoßwelle eine sich in dem Werkstück (10) ausbreitende Stoßwelle (52) ist.

19. Verfahren nach Anspruch 18, **dadurch gekennzeichnet, dass** die Stoßwelle (52) an einer Oberfläche (32) des Werkstücks (10) erfasst wird.

20. Verfahren nach Anspruch 18 oder 19, **dadurch gekennzeichnet, dass** die Stoßwelle (52) durch einen die Oberfläche (32) des Werkstücks (10) berührenden Sensor (120) erfasst wird.

21. Verfahren nach einem der Ansprüche 18 bis 20, **dadurch gekennzeichnet, dass** die Stoßwelle (52) an einer bearbeitungsseitigen Oberfläche (32) des Werkstücks (10) erfasst wird.
